# EUROPEAN PATENT SPECIFICATION

(11) **EP 2 428 441 B1**
(45) Date of publication and mention of the grant of the patent: **05.03.2014**
(21) Application number: 10176083.3
(22) Date of filing: 09.09.2010
(51) Int. Cl.: B62M 9/1342, B62M 9/1346

(54) **Derailleur**
Kettenschaltung
Dérailleur

(43) Date of publication of application: 14.03.2012
(73) Proprietor: Lin, Chang Hui, Province of China (TW)
(72) Inventor: Lin, Chang Hui, Province of China (TW)
(74) Representative: Beck, Michael Rudolf

(56) References cited:
- EP-A1- 0 060 797
- EP-A1- 0 067 729
- EP-A2- 1 955 940
- EP-A2- 1 985 532

## Description

The invention relates to a derailleur according to the preamble portion of claim 1.

A derailleur is known from EP 1 955 940 A2.

Further derailleurs are known from EP 0 060 797 A1, which discloses a derailleur according to the preamble of claim 1, and EP 0 067 729 A1.

Typical derailleur devices comprise a transmitting device for moving the chain sidewise and onto the sprocket wheels of different diameters. However, the chain should be engaged with the sprocket wheels before the chain may be engaged onto the sprocket wheels.

The invention is to provide a derailleur including a transmitting structure for moving a chain in a curved moving stroke and for sending the chain onto the sprocket wheels of different diameters without being interfered or interrupted by the sprocket wheels.
FIG. 1 is a partial exploded view of a derailleur;
FIGS. 2, 3 are partial perspective views of the derailleur;
FIG. 4 is another partial exploded view of the derailleur;
FIGS. 5, 6 are partial plan views of the derailleur;
FIG. 7 is a further partial exploded view of the derailleur;
FIGS. 8, 9, 10 are partial plan views of the derailleur; and
FIGS. 11, 12, 13 are partial perspective views of the derailleur.

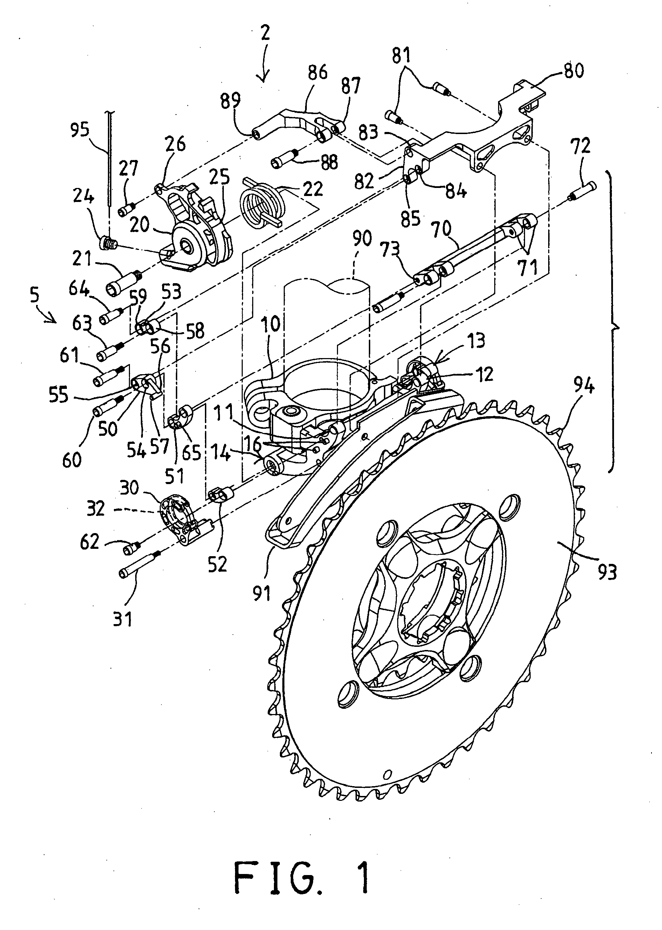

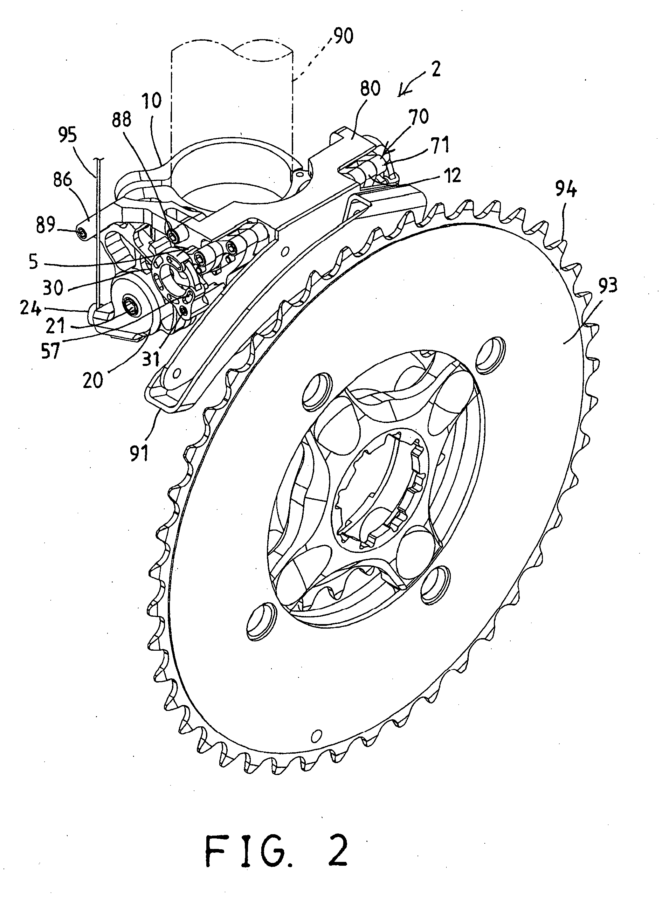

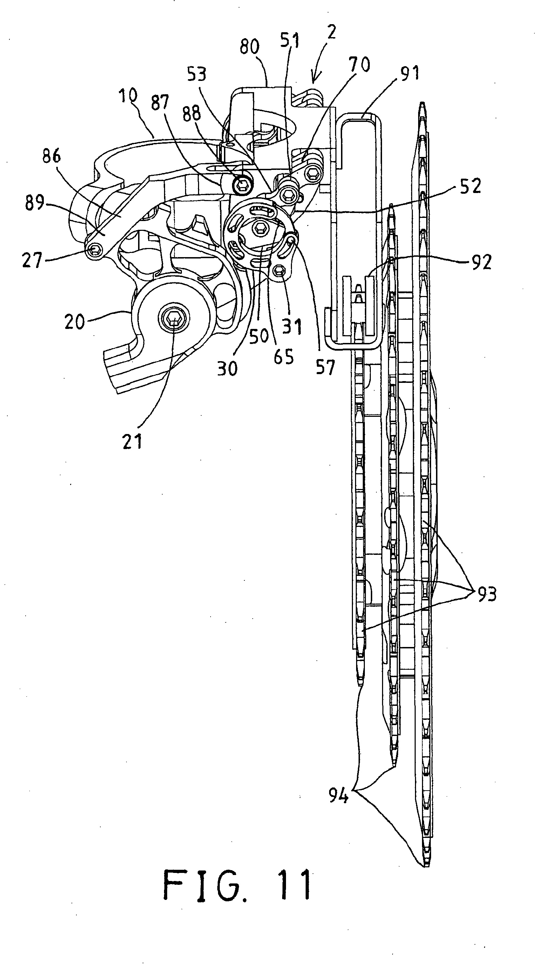

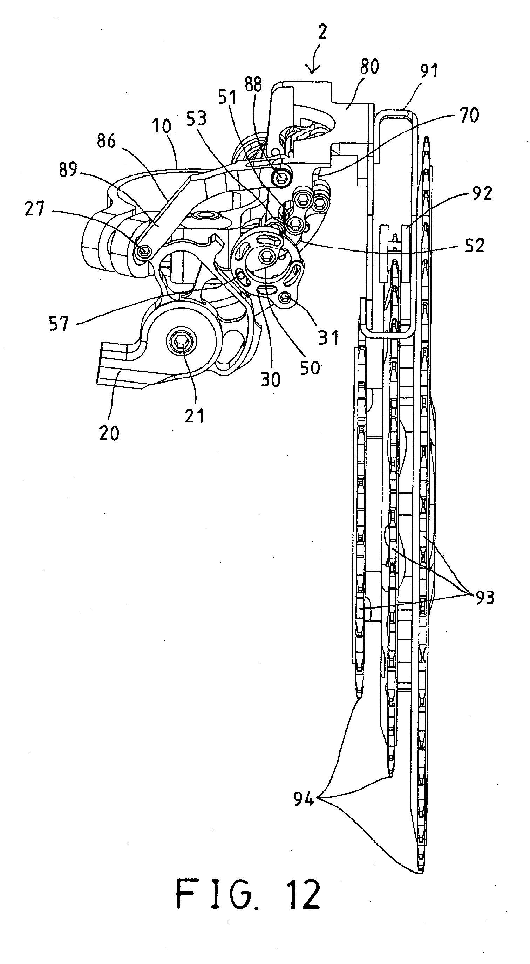

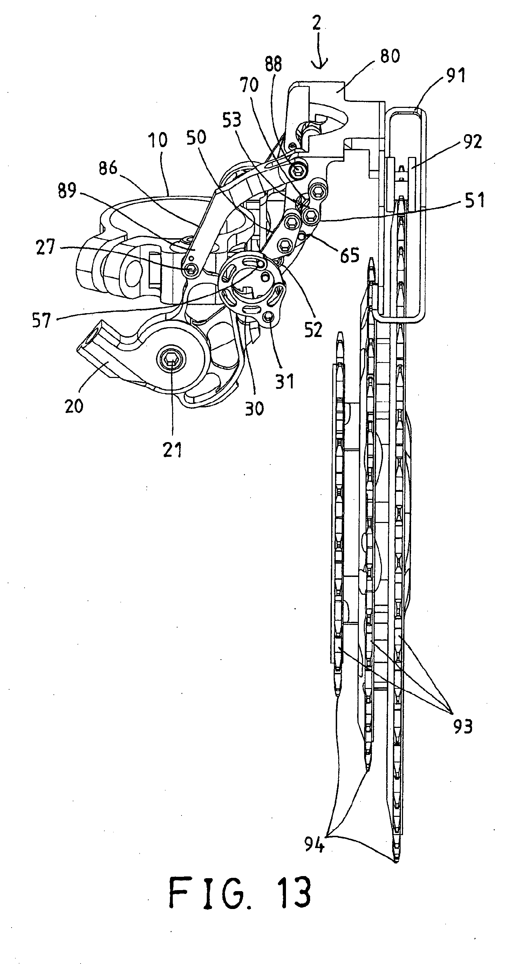

Referring to FIGS. 1-3, 11-13, a derailleur comprises an attachment 10 for mounting to (a fork of) a bicycle frame 90 and including a base 11 having one or more (such as two) ears 12 formed on the upper portion 13 and having a lower portion 14, a carrier 91 may engage with a chain 92 for moving the chain 92 in a curved moving stroke and onto the teeth 94 of the sprocket wheels 93 of different outer diameters, and a bracket 80 is attached to the carrier 91 with one or more fasteners 81 and includes a flap 82 having one or more (such as three) holes 83, 84, 85.

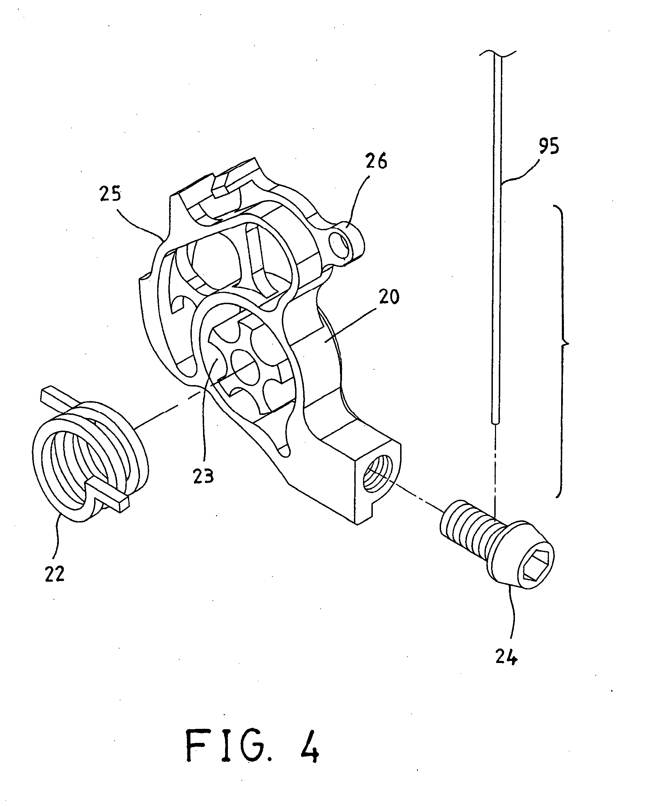

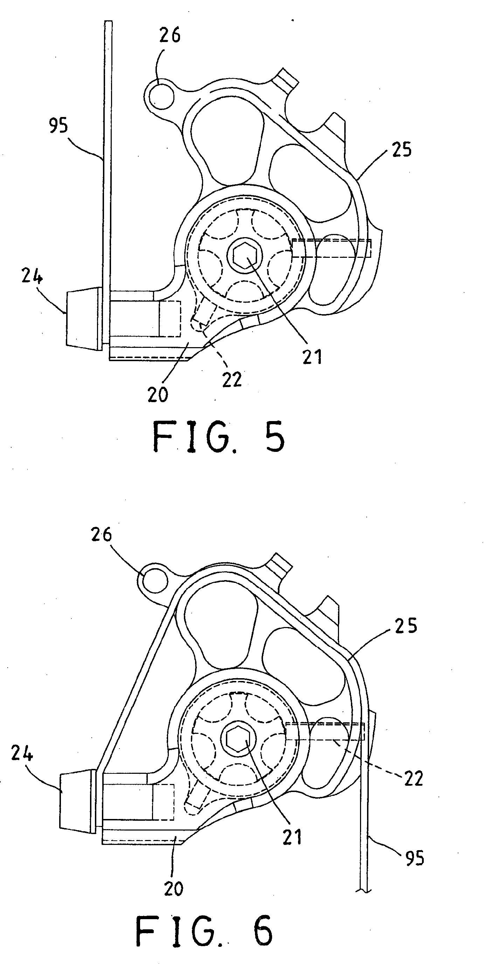

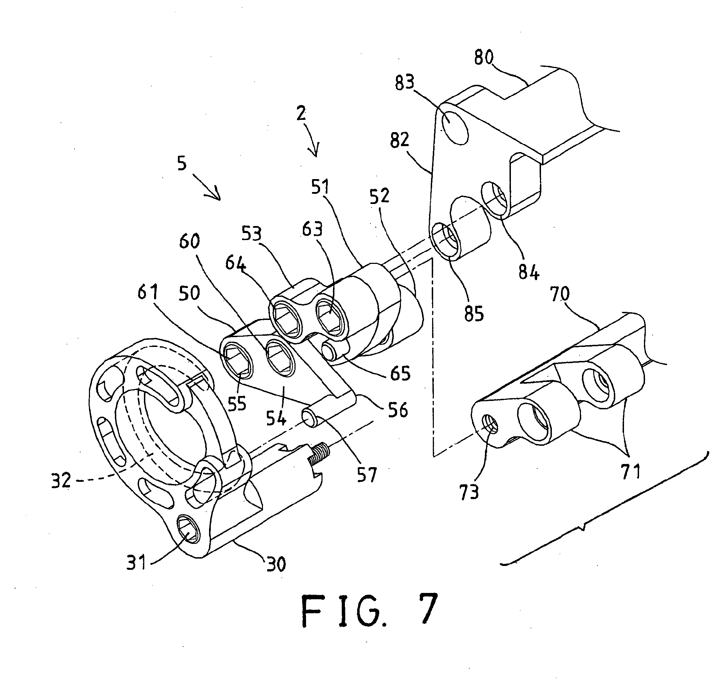

A coupler 2 couples the bracket 80 and the carrier 91 to the base 11 for moving the carrier 91 and the chain 92 in the curved moving stroke, and includes a follower 20 attached to the base 11 with a spindle 21, a spring 22 engaged between the base 11 and the follower 20 (FIGS. 4-6), the follower 20 includes a depression 23 for engaging with the spring 22, a cable 95 is coupled to one end of the follower 20 with a fastener 24 for rotating the follower 20, and engageble with the outer peripheral portion 25 of the follower 20 (FIG. 6) when the cable 95 is pulled downwardly. A lever 86 includes one end 87 mounted to one of the holes 83 of the bracket 80 with a pin 88 and another end 89 mounted to another end or an ear 26 of the follower 20 with another pin 27 for attaching the bracket 80 and the carrier 91 to the follower 20. A link 70 includes one or more ears 71 attached to the ears 12 with one or more pins 72, and a screw hole 73 (FIG. 7). A guide 30 is attached to the base 11 with one or more fasteners 31 and includes a peripheral groove 32.

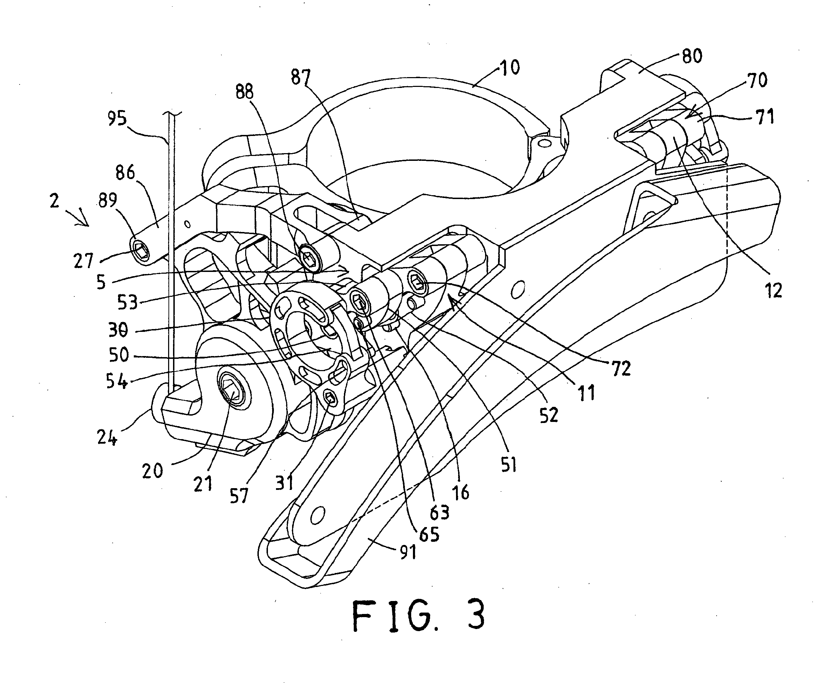

A linkage 5 includes one or more (such as four) bars 50, 51, 52, 53, the first bar 50 includes a middle portion 54 coupled to the second and the third bars 52, 53 with a shaft 60, one end 55 attached to the other hole 85 of the bracket 80 with a pin 61, and another end 56 having a rod 57 engaged in the groove 32 of the guide 30 for guiding and limiting the first bar 50 to rotate relative to the guide 30 and the base 11, the third bar 52 has one end coupled to the base 11 with a pin 62. The second bar 51 has one end coupled to one end 58 of the fourth bar 53 with a pin 63, and the fourth bar 53 has the other end 59 coupled to the other hole 84 of the bracket 80 with a pin 64. The second bar 51 includes a projection 65 for engaging with the first bar 50. The base 11 includes one or more (such as two) protrusions 16 (FIGS. 1, 3) for engaging with the third bar 52.

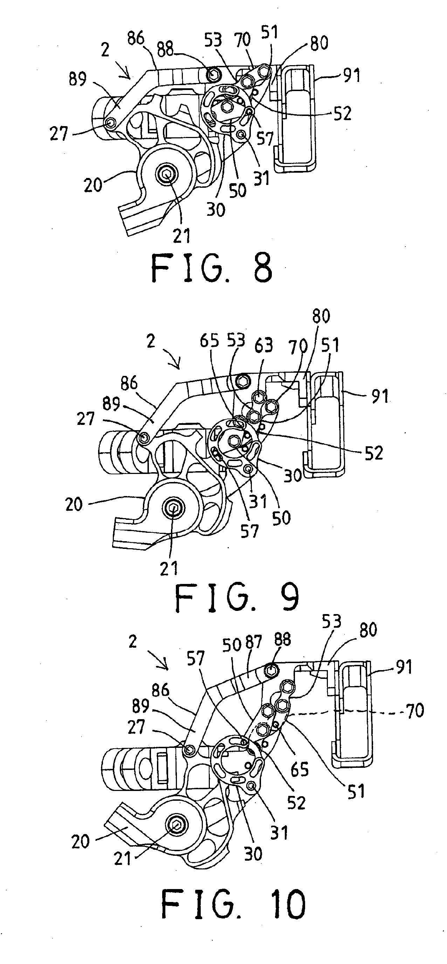

In operation, when the follower 20 is rotated relative to the base 11 by the cable 95 (FIGS. 8-13), the bracket 80 and the carrier 91 may be rotated relative to the follower 20 and may be moved upwardly or downwardly in a curved moving stroke with the lever 86 and the bars 50-53 of the linkage 5 for sending the chain 92 onto the teeth 94 of the sprocket wheels 93 of different outer diameters without being interfered or interrupted by the sprocket wheels 93.

## Claims

1. A derailleur comprising:
an attachment (10) including a base (11),
a number of sprocket wheels (93),
a carrier (91) for engaging with a chain (92) and for moving the chain (92) onto teeth (94) of the wheels (93), and
a coupler (2) coupled between the carrier (91) and the base (11) for moving the carrier (91) and the chain (92), the coupler (2) including a follower (20) attached to the base (11), a bracket (80) attached to the carrier (91), a lever (86) coupled between the follower (20) and the bracket (80),a link (70) attached to the base (11), whereby
the coupler (2) is configured to move the carrier (91) and the chain (92) in a curved moving stroke and includes
a linkage (5) coupled between the base (11) and the link (70) and the bracket (80), wherein the linkage (5) includes a first bar (50), a second bar (51) and a third bar (52) coupled together with a shaft (60), the first bar (50) includes one end (55) coupled to the bracket (80) with a pin (61), the third bar (52) is coupled to the link (70), **characterized in that** the second bar (51) is coupled to one end (58) of a fourth bar (53) which has another end (59) coupled to the bracket (80) with a pin (64), and **in that**
a guide (30) attached to the base (11) with one or more fasteners (31) and including a peripheral groove (32), and **in that**
the first bar (50) includes a rod (57) engaged in the groove (32) of the guide (30).

2. A derailleur as claimed in claim 1, wherein the second bar (51) includes a projection (65) for engaging with the first bar (50).

3. A derailleur as claimed in claim 1 or 2, wherein the base (11) includes one or more protrusions (16) for engaging with the third bar (52).

4. A derailleur as claimed in one of claims 1 to 3, wherein a cable (95) is coupled to the follower (20).

## Patentansprüche

1. Kettenschaltung, umfassend:
eine Befestigung (10) mit einer Basis (11),
mehrere Kettenräder (93),
einen Träger (91) zum Eingriff mit einer Kette (92) und zum Bewegen der Kette (92) auf Zähne (94) der Kettenräder (93), und
eine Kupplung (2), die zwischen dem Träger (91) und der Basis (11) eingekoppelt ist, um den Träger (91) und die Kette (92) zu bewegen, wobei die Kupplung (2) ein Folgeelement (20) aufweist, das an der Basis (11) befestigt ist, eine Halterung (80), die an dem Träger (91) befestigt ist, einen Hebel (86), der zwischen dem Folgeelement (20) und der Halterung (80) angeordnet ist, ein Zwischenglied (70), das an der Basis (11) befestigt ist, wobei die Kupplung (2) dazu eingerichtet ist, den Träger (91) und die Kette (92) in einer gekrümmten Bahn zu bewegen und umfasst
eine Verbindung (5), die zwischen der Basis (11), dem Zwischenglied (70) und der Halterung (80) eingekoppelt ist, wobei die Verbindung (5) ein erstes Stegelement (50), ein zweites Stegelement (51) und ein drittes Stegelement (52) aufweist, die über eine Welle (60) miteinander gekoppelt sind, das erste Stegelement (50) ein erstes Ende (55) aufweist, das mithilfe eines Stifts (61) mit der Halterung (80) gekoppelt ist und das dritte Stegelement (52) mit dem Zwischenglied (70) gekoppelt ist,
**dadurch gekennzeichnet, dass**
das zweite Stegelement (51) mit einem Ende (58) eines vierten Stegelements (53) gekoppelt ist,
welches ein weiteres Ende (59) aufweist, das mithilfe eines Stifts (64) mit der Halterung (80) gekoppelt ist, und dadurch, dass
eine Führung (30), die mit einem oder mehreren Befestigungselementen (31) an der Basis befestigt ist, eine umlaufende Nut (32) aufweist, und dadurch, dass
das erste Stegelement (50) einen Stab (57) aufweist, der in die Nut (32) des Führungselements (30) eingreift.

2. Kettenschaltung nach Anspruch 1, bei der das zweite Stegelement (51) einen Vorsprung (65) zum Eingriff mit dem ersten Stegelement (50) aufweist.

3. Kettenschaltung nach Anspruch 1 oder 2, bei der die Basis (11) einen oder mehrere Vorsprünge (16) zum Eingriff mit dem dritten Stegelement (52) aufweist.

4. Kettenschaltung nach einem der Ansprüche 1 bis 3, bei der ein Seil (95) mit dem Folgeelement (20) gekoppelt ist.

## Revendications

1. Dérailleur comprenant :
une fixation (10) comprenant une base (11),
un nombre de roues dentées (93),
un support (91) pour se mettre en prise avec une chaîne (92) et pour déplacer la chaîne (92) sur des dents (94) des roues (93) et
un coupleur (2) couplé entre le support (91) et la base (11) pour déplacer le support (91) et la chaîne (92), le coupleur (2) comprenant une came (20) fixée à la base (11), un support de fixation (80) fixé au support (91), un levier (86) couplé entre la came (20) et le support de fixation (80), un lien (70) fixé à la base (11),
le coupleur (2) étant configuré pour déplacer le support (91) et la chaîne (92) dans une course de déplacement courbé et comprenant
une articulation (5) couplée entre la base (11) et le lien (70) et le support de fixation (80), l'articulation (5) comprenant une première barre (50), une seconde barre (51) et une troisième barre (52) couplées ensemble à un arbre (60), la première barre (50) comprenant une extrémité (55) couplée au support de fixation (80) avec une broche (61), la troisième barre (52) étant couplée au lien (70),
**caractérisé en ce que** la seconde barre (51) est couplée à une extrémité (58) d'une quatrième barre (53) qui a une autre extrémité (59) couplée au support de fixation (80) avec une broche (64) et
**en ce qu'**un guide (30) est fixé à la base (11) avec une ou plusieurs attaches (31) et comprend une rainure périphérique (32) et
**en ce que** la première barre (50) comprend une tige (57) en prise dans la rainure (32) du guide (30).

2. Dérailleur selon la revendication 1 dans lequel la seconde barre (51) comprend une projection (65) pour se mettre en prise avec la première barre (50).

3. Dérailleur selon la revendication 1 ou 2 dans lequel la base (11) comprend une ou plusieurs saillies (16) pour se mettre en prise avec la troisième barre (52).

4. Dérailleur selon l'une des revendications 1 à 3 dans lequel un câble (95) est couplé à la came (20).
